**Europäisches Patentamt**

**European Patent Office**

**Office européen des brevets**

(19)

(11) Veröffentlichungsnummer: **0 034 815**
**B1**

(12) # EUROPÄISCHE PATENTSCHRIFT

(45) Veröffentlichungstag der Patentschrift:
04.09.85

(51) Int. Cl.⁴: **G 05 G 9/14**, F 16 H 5/04

(21) Anmeldenummer: **81101202.0**

(22) Anmeldetag: **20.02.81**

(54) **Schalteinrichtung für das Getriebe eines Geländefahrzeuges.**

(30) Priorität: **23.02.80 DE 3006872**

(43) Veröffentlichungstag der Anmeldung:
**02.09.81 Patentblatt 81/35**

(45) Bekanntmachung des Hinweises auf die Patenterteilung:
**04.09.85 Patentblatt 85/36**

(84) Benannte Vertragsstaaten:
**AT BE CH DE FR GB IT LI LU NL SE**

(56) Entgegenhaltungen:
**DE - A - 1 655 500**
**DE - A - 2 400 184**
**DE - A - 2 550 484**
**FR - A - 1 179 322**
**US - A - 3 786 690**

**Buch von F. Chagette "Technique Automobile", 6.**
**Auflage (1977) Bnd. II, S. 72-79**

(73) Patentinhaber: **Interparte Aktiengesellschaft,**
**Aeulestrasse 5 Postfach 470, FL-9490 Vaduz (LI)**

(72) Erfinder: **Ertl, Herbert, Dr. Sauermann-Weg 13,**
**D-8130 Starnberg (DE)**

(74) Vertreter: **Patentanwaltsbureau Scheidegger, Zwicky &**
**Co., Stampfenbachstrasse 48 Postfach, CH-8023 Zürich**
**(CH)**

## Beschreibung

Die Erfindung betrifft eine Schalteinrichtung für das Getriebe eines Geländefahrzeuges, das aus mehreren, beweglich miteinander verbundenen Fahrzeugteilen besteht, wobei der Fahrerstand mit der Schalteinrichtung in dem einen Fahrzeugteil und das Getriebe in dem anderen der beweglich miteinander verbundenen Fahrzeugteile angeordnet ist, mit einem Schalthebel sowie Betätigungsgliedern mit jeweils einer Kerbe, in die das Schalthebelende zur Gangvorwahl eingreift.

Bei einer bekannten Vorrichtung zum Schalten von Getriebegängen bestehen die Betätigungsglieder aus Schaltstangen, die in bekannter Weise ein Schaltzahnrad auf eine Welle längsverschieben, um Getriebezahnräder in Eingriff zu bringen. Diese häufig angewendete Art der Bewegungsübertragung eignet sich für alle Antriebe und auch für einen Heckmotorantrieb in einem Fahrzeug, bei dem die Schalteinrichtung und das Getriebe räumlich auseinander liegen, sie eignet sich jedoch nicht für ein Fahrzeug, das aus mehreren beweglich miteinander verbundenen Fahrzeugteilen besteht, welche untereinander zur Anpassung an die Bodenkontur mit einem Gelenk verbunden sind, das eine Verdrehung der Fahrzeugteile gegeneinander zulässt. Bei einer Verdrehung würde die Schaltung bei Verwendung von Stangen zur Bewegungsübertragung unkontrolliert beeinflusst werden. Diese Schwierigkeiten kann man dadurch vermeiden, dass man den Motor, den Fahrerstand, die Schalteinrichtung sowie das Getriebe nur in dem einen Fahrzeugteil eines aus mehreren miteinander verbundenen Fahrzeugteilen bestehenden Fahrzeugs anordnet. Dann wäre es jedoch nicht möglich, ein Geländefahrzeug ohne zusätzliche Trimmeinrichtungen etc. auch voll schwimmfähig zu machen, da das in dieser Weise ausgestaltete Fahrzeug wegen seiner Kopflastigkeit nicht schwimmfähig wäre.

Bei einer aus der DE-OS 1 655 500 bekannten Einrichtung sind der Schalthebel der Schalteinrichtung und das Getriebe räumlich getrennt voneinander angeordnet und durch Schaltübertragungsglieder verbunden, wobei je eines dieser Übertragungsglieder für die Gangvorwahl und das andere für die Gangumschaltung dient, weshalb der Schalthebel auch um zwei übereinander liegende und rechtwinklig sich kreuzende Achsen schwenkbar ist, um zwei Hebel zu verschwenken, an denen die Übertragungsglieder befestigt sind. Wegen der zweifachen Hebelverstellung durch einen gemeinsamen Schalthebel ist diese bekannte Vorrichtung ziemlich kompliziert und entsprechend kostenaufwendig.

Der vorliegenden Erfindung liegt daher die Aufgabe zugrunde, die Schalteinrichtung bei einem Geländefahrzeug der eingangs genannten Art einfacher zu gestalten, sodass nur ein Schaltübertragungsglied zum Betätigen des vom Fahrerstand räumlich getrennt angeordneten Getriebes ausreicht.

Diese Aufgabe wird durch die im Anspruch 1 angeführten Massnahmen gelöst. Der Vorteil dieser wesentlich einfacher ausgestalteten Einrichtung besteht darin, dass die Gangvorwahl durch Verschiebung des Schalthebels in die Kerbe des jeweiligen Betätigungsgliedes im Schaltgehäuse erfolgt und nur die Gangumschaltung mittels Seilzug herbei geführt wird. Die Form der Betätigungsglieder mit zweiarmigem Hebel mit einer Kerbe an dem einen Hebarmende ist an sich bekannt durch das Buch von F. Chagette «Technique Automobile», 6. Auflage (1977) Bd. II, S. 72–79. Ein Ausführungsbeispiel ist in der nachfolgenden Beschreibung anhand der Zeichnung näher erläutert. Es zeigen:

Fig. 1 einen Querschnitt der Schalteinrichtung in der Schwenkebene der Betätigungsglieder für die Gangumschaltung;

Fig. 2 einen Teilquerschnitt der Schalteinrichtung senkrecht zur Schnittebene gemäss Fig. 1.

Generell sieht die Erfindung vor, dass die Verbindung zwischen Fahrerstand und Getriebeblock mittels flexibler Leitungen erfolgt und zwar mittels Seilzügen, die in flexiblen Hüllen geführt sind, also sog. Bowdenzüge. Hierbei kann aber mit einer Leitung nur bewerkstelligt werden, dass zwei Schaltvorgänge durchführbar sind und zwar einmal in Zug- und zum andernmal in Schubrichtung des Seiles. Es muss also pro Gangpaar ein Schaltzug angeordnet sein, wobei die Gangwahl im Fahrerstand in der gleichen Art erfolgt, wie bei allen bisher üblichen Ausführungsformen, nämlich in der sog. H-Schaltung.

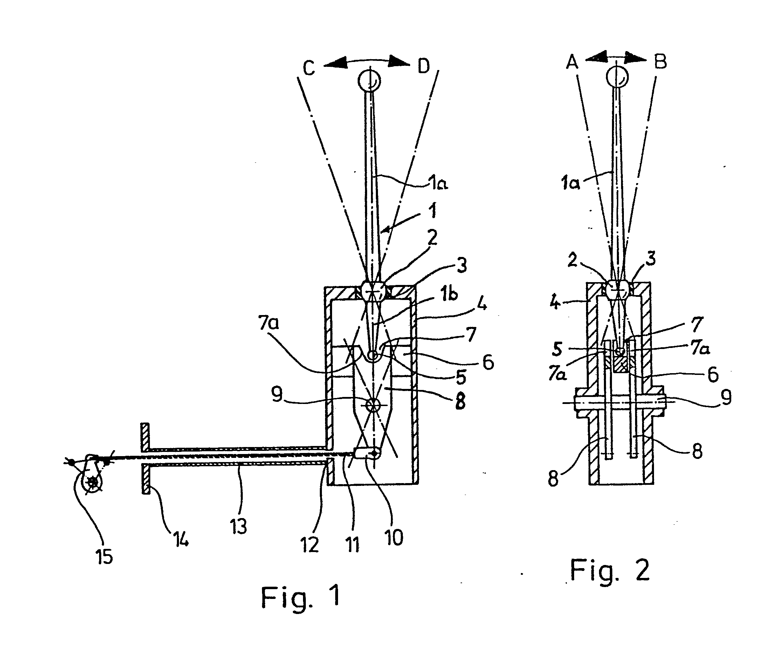

Wie die Fig. 1 zeigt, ist ein Schalthebel 1 mittels eines Abschnitts 2 mit kugelförmiger Oberfläche in einem Gehäuse 4 so gelagert, dass er in zwei Ebenen ausgelenkt werden kann, wobei der Abschnitt 2 mit kugelförmiger Oberfläche das Schwenkgelenk 3 am Gehäuse 4 bildet. Der Schalthebel ist an dem Schwenkgelenk 3 in einen langen Hebelteil 1a und in einen kürzeren Hebelteil 1b unterteilt. Am Ende des kürzeren Hebelteils ist ein kugelförmiger Ansatz 5 angeordnet, der einen reibungsarmen und klemmfreien Eingriff in die einzelnen Schaltstufen ermöglicht. Durch seitliches Verschwenken des Schalthebels 1 lässt sich dieser in zwei oder mehrere Stellungen bringen, die jeweils in einer Ebene liegen, in welcher er jeweils nach vorne und hinten bewegt werden kann. Zur besseren Verständlichkeit sind in den Figuren 1 und 2 diese Schaltbewegungen bezeichnet, wobei die seitliche Bewegung, also die Wahl der Ebenen mit A–B bezeichnet sind und die Gangwahl, also nach vorne oder hinten – mit C–D. Der Schalthebel 1 greift mit seinem kugelförmigen Ansatz 5 in die Eingriffskerbe 7a eines Betätigungsgliedes 8 der jeweils gewählten Schaltkombination ein. Diese Schaltkombination setzt sich aus dem um eine zentrale Achse 9 schwenkbaren Betätigungsglied, einem daran angeordneten Seilzug-Anschlusselement 10 und einem Schaltseilzug 11 zusammen. Eine solche Schaltkombination 8, 10, 11 befindet sich in jeder der Ebenen, im gezeigten Ausführungsbeispiel sind es gemäss der sog. H-Schaltung zwei Ebenen. Durch die Schwenkbewegung des Schalthebels 1 wird der Schaltvorgang über die Schaltseilzüge 11 auf das nicht dargestellte Getriebe übertragen. Ferner ist vorgesehen, dass die einzelnen Schaltebenen voneinander getrennt sind, um dadurch die Schaltzuverlässigkeit sicherzustellen. Dies geschieht dadurch, dass der Schalthebel 1 nur in der neutralen Mittelstellung quer über ein zwischen den Betätigungsgliedern 8 angeordnetes Trennblech 6 mit einer Aussparung 7 von einer Schaltebene in die andere geführt werden kann. Auf der zentralen Achse 9, die in dem Schaltgehäuse 4 gelagert ist, kann eine Mehrzahl von Betätigungsgliedern 8 angeordnet werden. Diese Konstruktion kann daher in derselben Ausführung nicht nur für die Gangwahl, sondern auch für die Schaltung einer Differentialsperre, eines Vorgeleges oder sonstiger zu schaltender Einrichtungen verwendet werden.

Alle Betätigungsglieder 8, die um die Achse 9 schwenkbar gelagert sind, weisen an der dem Schalthebel 1 zugewandten Oberseite eine Eingriffskerbe 7a und an der entgegengesetzten unteren Seite ein Seilzug-Anschlusselement 10 für den Schaltseilzug 11 auf. Letzterer ist durch eine Bohrung im Schaltgehäuse 4 zum Schalthebel 15 des Getriebeganges geführt, wobei am Schaltgehäuse 4 und am nicht dargestellten Getriebegehäuse sog. Gegenhalter 12, 14 für die Seilhülle 13 angeordnet sind.

Um diese vorgeschlagene Ausführung unkompliziert und robust auszuführen, werden sowohl das Gehäuse 4, als auch die Betätigungsglieder 8, die Trennbleche 6 etc. aus Stanzteilen hergestellt. Zur Fixierung der einzelnen Schaltstufen kann zusätzlich zu der im nicht dargestellten Getriebe bereits vorhandenen Fixierung innerhalb der vorgeschlagenen Schalteinrichtung jeweils noch eine nicht dargestellte, federbelastete Kugelarretierung vorgesehen werden.

## Patentansprüche

1. Schalteinrichtung für das Getriebe eines Geländefahrzeuges, das aus mehreren beweglich miteinander verbundenen Fahrzeugteilen besteht, wobei der Fahrerstand mit der Schalteinrichtung in dem einen Fahrzeugteil und das Getriebe in dem anderen der beweglich miteinander verbundenen Fahrzeugteile angeordnet ist, mit einem Schalthebel sowie Betätigungsgliedern mit jeweils einer Kerbe, in die das Schalthebelende zur Gangvorwahl eingreift, dadurch gekennzeichnet, dass die Betätigungsglieder jeweils als zweiarmige Hebel (8) mit einer Kerbe (7a) an dem einen Hebelarmende ausgebildet und in einem vom Getriebe räumlich getrennten Schaltgehäuse (4) auf einer gemeinsamen Schwenkachse (9) parallel im Abstand hintereinander angeordnet sind und dass an dem zu der Kerbe (7a) entgegengesetzten anderen Hebelarmende des Betätigungsgliedes (8) ein Schaltseilzug (11) befestigt ist, der einen auf dem anderen Fahrzeugteil befindlichen Gangumschalter (15) betätigt.

2. Schalteinrichtung nach Anspruch 1, dadurch gekennzeichnet, dass im Schaltgehäuse (4) zwischen jeweils benachbarten Betätigungsgliedern (8) ein Trennblech (6) angeordnet ist, das eine mit der Kerbe (7a) am Ende des Betätigungsgliedes (8) in dessen neutraler Mittelstellung fluchtende Aussparung (7) aufweist und das die Schaltebenen benachbarter Betätigungsglieder (8) voneinander trennt.

## Claims

1. Gear-changing device for the gearbox of a cross-country vehicle that consists of several vehicle parts displaceably connected with each other, wherein the driver's position with the gear-changing device is arranged in one of the vehicle parts and the gear box is arranged in the other of the displaceably interconnected vehicle parts, with a gear shift lever as well actuating members each with a notch in which the end of the gear shift lever engages for gear selection, characterised in that the actuating members are each formed as a two-armed lever (8) with a notch (7a) at one of the ends of the lever arm and are arranged on a common pivotal axis (9) in parallel with and at a distance behind each other in a shift-housing (4) spatially separated from the gearbox, and that the other end of the lever arm of the actuating member (8) opposite to the notch (7a) is secured to a cable control mechanism (11) which actuates the gear-engaging mechanism (15) disposed in the other vehicle part.

2. Gear-changing device according to claim 1, characterised in that a separating plate (6) is arranged in the shift-housing (4) between the respective adjacent actuating members (8) and has a recess (7) which is aligned with the notch (7a) at the end of the actuating member (8) in its neutral position and which separates the actuating members (8) adjacent to each other in the shifting plane.

## Revendications

1. Dispositif de commande pour la transmission d'un véhicule tous terrains qui se compose de plusieurs parties de véhicule reliées mobiles les unes aux autres, où le poste du conducteur avec le dispositif de commande est disposé dans une première partie du véhicule et la transmission dans l'autre des parties de véhicule reliées mobiles l'une à l'autre, avec un levier de changement ainsi que des organes d'actionnement ayant chacun une rainure, où s'engrène l'extrémité du levier de changement pour la présélection des vitesses, caractérisé en ce que les organes d'actionnement ont chacun la forme d'un levier à deux bras (8) avec une rainure (7a) à une extrémité du bras de levier et qui sont disposés dans un carter de changement (4) espacé de la transmission, sur un axe commun de pivotement (9) en étant disposés parallèlement à une certaine distance les uns derrière les autres et en ce qu'à l'autre extrémité du bras de levier opposée à la rainure (7a) de l'organe d'actionnement (8), est fixé un cable de changement (11) qui actionne un changement de vitesse (15) se trouvant sur l'autre partie du véhicule.

2. Dispositif de commande selon la revendication 1 caractérisé en ce que dans le carter de changement (4) entre des organes voisins d'actionnement (8) est disposée une tôle de séparation (6) qui présente un évidement à fleur avec la rainure (7a) à l'extrémité de l'organe d'actionnement (8) à sa position médiane neutre et qui sépare les plans de changement d'organes voisins d'actionnement (8).

4

Fig. 1

Fig. 2